(19) Europäisches Patentamt / European Patent Office / Office européen des brevets

(11) **EP 2 738 923 B1**

(12) **EUROPEAN PATENT SPECIFICATION**

(45) Date of publication and mention
of the grant of the patent:
**18.07.2018 Bulletin 2018/29**

(51) Int Cl.:
***H02K 19/02*** (2006.01)    ***H02K 1/22*** (2006.01)

(21) Application number: **11869838.0**

(86) International application number:
**PCT/CN2011/079181**

(22) Date of filing: **31.08.2011**

(87) International publication number:
**WO 2013/013435 (31.01.2013 Gazette 2013/05)**

(54) **PERMANENT MAGNET SYNCHRONOUS MOTOR**

SYNCHRONER PERMANENTMAGNETMOTOR

MOTEUR SYNCHRONE À AIMANTS PERMANENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.07.2011 CN 201110212590**

(43) Date of publication of application:
**04.06.2014 Bulletin 2014/23**

(73) Proprietors:
- **Gree Electric Appliances, Inc.of Zhuhai**
  **Zhuhai, Guangdong 519070 (CN)**
- **Gree Green Refrigeration Technology Center Co.,Ltd**
  **Zhuhai, Guangdong 519070 (CN)**

(72) Inventors:
- **HUANG, Hui**
  **Zhuhai**
  **Guangdong 519070 (CN)**
- **HU, Yusheng**
  **Zhuhai**
  **Guangdong 519070 (CN)**
- **CHEN, Dongsuo**
  **Zhuhai**
  **Guangdong 519070 (CN)**
- **CHEN, Huajie**
  **Zhuhai**
  **Guangdong 519070 (CN)**
- **XIAO, Yong**
  **Zhuhai**
  **Guangdong 519070 (CN)**
- **ZENG, Xueying**
  **Zhuhai**
  **Guangdong 519070 (CN)**
- **ZHANG, Wenming**
  **Zhuhai**
  **Guangdong 519070 (CN)**

(74) Representative: **Fry, David John et al**
**Agile IP LLP**
**Airport House**
**Purley Way**
**Croydon, Surrey CR0 0XZ (GB)**

(56) References cited:
EP-A1- 2 117 102    EP-A2- 0 746 079
CN-C- 1 158 741    JP-A- 2002 272 031
JP-A- 2004 153 886    US-A1- 2002 153 796
US-A1- 2003 094 875    US-A1- 2004 150 282
US-B2- 6 703 744    US-B2- 6 836 045

**Description**

TECHNICAL FIELD

The present disclosure relates to a permanent magnet synchronous motor.

BACKGROUND OF THE INVENTION

The permanent magnet synchronous motor comprises a stator and a rotor. The rotor is provided thereon with magnet slots and the magnet slots are provided therein with permanent magnets. During operation, the rotor is driven to rotate by permanent magnetic torque and reluctance torque, as illustrated by the following formula:

$$\mathrm{T} = mp(L_q - L_d)i_d i_q + mp\Psi_{PM}i_q$$

Wherein, the first term $mp(L_q - L_d)i_d i_q$ is the reluctance torque; the second term $mp\Psi_{PM}i_q$ is the permanent magnetic torque; $\Psi_{PM}$ is the maximum of the stator and rotor coupling flux generated by the permanent magnet; m is the number of the phases of the stator winding, $L_d$ and $L_q$ are respectively the d-axis inductance and the q-axis inductance; $i_d$ and $i_q$ are respectively the armature current component along the d-axis and the armature current component along the q-axis.

Because the permanent magnetic torque contributes most to the output torque of the permanent magnet synchronous motor, the common method in the prior art for increasing the output torque T of the permanent magnet synchronous motor is performed by increasing the permanent magnetic torque. The reluctance torque is rarely considered for increasing the output torque T of the permanent magnet synchronous motor.

Practically, the permanent magnetic torque relies heavily on the performances of the permanent magnet. Rare earth has to be used in producing the permanent magnet in the prior art, which will cause damage to the environment, increase the cost of the product and go against the optimization of resources utilization.

US2002/153796 discloses a generator-motor for a vehicle. EP0746079 discloses a motor with built-in permanent magnets. US2003/094875 discloses a synchronous reluctance motor. US2004/150282 discloses an electrical motor with a rotor having multiple rows of slits.

SUMMARY OF THE INVENTION

According to the invention, there is provided a permanent magnet synchronous motor having the features of claim 1 of the appended set of claims.

Preferred embodiments are aimed at providing a permanent magnet synchronous motor so as to reduce the reliance on rare earth and increase the output torque of the permanent magnet synchronous motor by other means.

Preferably, the wire slots are evenly distributed on the stator circumferentially; and the sets of magnet slots are evenly distributed in the rotor circumferentially.

Preferably, each set of magnet slots comprises at least two magnet slots; and the magnet slots of each set of magnet slots face towards a same direction and are arranged along a radial direction.

Preferably, the magnet slots are arc-shaped slots or U-shaped slots facing outwards along a radial direction.

Preferably, there is a clearance between each of two ends of each permanent magnet and its corresponding magnet slot.

Preferably, the permanent magnet is flat-shaped or arc-shaped.

Preferably, the permanent magnet is arc-shaped, and gradually gets smaller in thickness towards its two ends.

The advantages or principles of the present invention will be described as follows:

1. The present invention breaks through the traditional thoughts and increases the output torque of the permanent magnet synchronous motor from the viewpoint of the reluctance torque. Specifically, when the permanent magnet is definite, the permanent magnetic torque of the permanent magnet synchronous motor substantially remains the same, and the output torque of the permanent magnet synchronous motor is increased mainly by optimizing the structure of the permanent magnet synchronous motor. In other words, the output torque of the permanent magnet synchronous motor is increased without increasing the amount of the rare earth, which reduces the pollution of environment and lowers the cost of production.

2. It is testified through lots of experiments that the value of (Lq - Ld) can be increased effectively when $0.15 \leq K \leq 0.85$, so as to increase the output torque of the permanent magnet synchronous motor. Preferably, when $0.2 \leq K \leq 0.80$, the output torque of the permanent magnet synchronous motor reaches the maximum.

3. There is a clearance between each of the two ends of each permanent magnet and its corresponding magnet slot, which can prevent the two ends of the permanent magnet from being demagnetized and avoid damaging the permanent magnet in assembling.

4. Each of the permanent magnets gradually gets smaller in thickness towards its two ends, which can not only prevent the permanent magnet from being demagnetized but also prevent the permanent magnet from sliding in the magnet slot.

BRIEF DESCRIPTION OF THE DRAWINGS

Fig. 1 is a sectional view of the permanent magnet synchronous motor according to the first embodiment of the present invention;
Fig. 2 is a partial enlarged view of Fig.1 with the coils and the permanent magnet removed therefrom;
Fig. 3 is a broken line graph of the inductance difference (Lq - Ld) versus K;
Fig. 4 is a sectional view of the permanent magnet synchronous motor according to the second embodiment of the present invention;
Fig. 5 a sectional view of the permanent magnet synchronous motor according to the third embodiment of the present invention;

in which, the elements are denoted as follows:

| 1. stator | 2. rotor | 3. wire slot | 4.coil | 5. set of magnet slot |
|---|---|---|---|---|
| 6. magnet slot | 7. permanent magnet | w. spacing | Lc. tooth width | |

DETAILED DESCRIPTION OF THE PREFERRED EMBODIMENTS

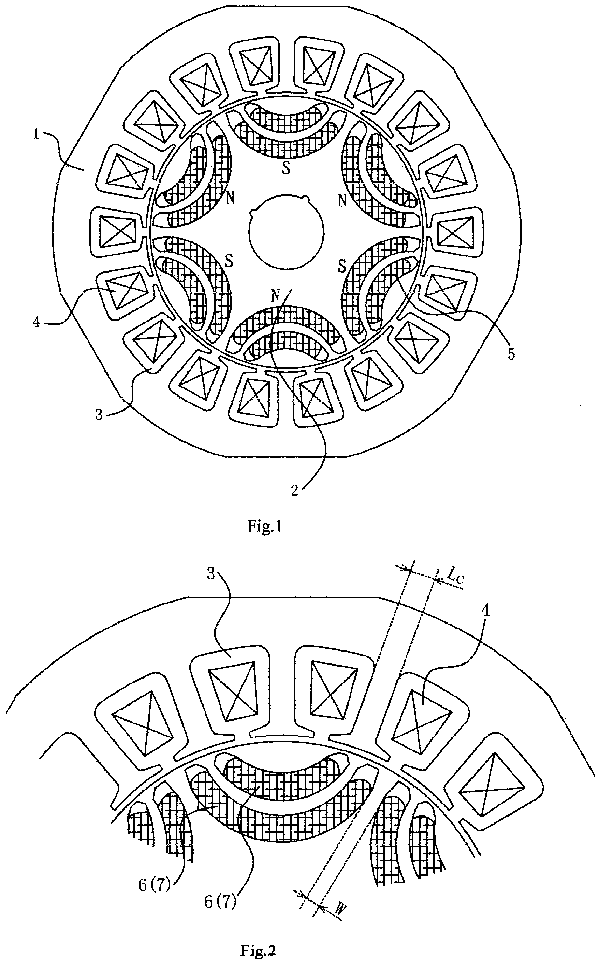

The embodiments of the present invention will be described in details as follows:
In the first embodiment, as shown in Figs. 1 and 2, the permanent magnet synchronous motor comprises a stator 1 and a rotor 2. A plurality of wire slots 3 are circumferentially distributed on the stator 1, and a plurality of sets of magnet slots 5 are circumferentially distributed in the rotor 2. Wire slots 3 are provided therein with coils 4, and each set of magnet slots 5 is provided therein with permanent magnets 7. The formulae $3PW/L_{C}S = K$ and $0.15 \leq K \leq 0.85$ are satisfied, wherein, $P$ is the number of the pole-pairs of the permanent magnet 7 in the rotor 2, $W$ is the spacing between two adjacent sets of magnet slots 5, $L_C$ is the tooth width of the stator 1, and $S$ is the number of the wire slots 3 on the stator 1. Preferably, $0.2 \leq K \leq 0.8$.

The permanent magnets 7 are classified into two categories: N pole permanent magnet and S pole permanent magnet. The permanent magnets 7 in the same set of magnet slot 5 have the same magnetic polarity, and adjacent sets of permanent magnets 7 have opposite magnetic polarities, i.e., N-pole magnet and S-pole magnet are alternating. The wire slots 3 are evenly distributed on the stator 1 circumferentially, and the sets of magnet slots 5 are evenly distributed on the rotor 2 circumferentially. Each set of magnet slots 5 comprises two magnet slots 6, and both magnet slots 6 face towards the same direction and are arranged along the radial direction. The magnet slot 6 is an arc-shaped slot facing outwards along the radial direction, and the permanent magnet 7 is arc-shaped as well. There is a clearance between each of the two ends of each permanent magnet 7 and its corresponding magnet slot 6.

The advantages or principles of the present invention will be described as follows:

1. The present invention breaks through the traditional thoughts and increases the output torque of the permanent magnet synchronous motor from the viewpoint of the reluctance torque. Specifically, when the permanent magnet 7 is definite, the permanent magnetic torque of the permanent magnet synchronous motor substantially remains the same, and the output torque of the permanent magnet synchronous motor is increased mainly by optimizing the structure of the permanent magnet synchronous motor. In other words, the output torque of the permanent magnet synchronous motor is increased without increasing the amount of the rare earth, which reduces the pollution of environment and lowers the cost of production.

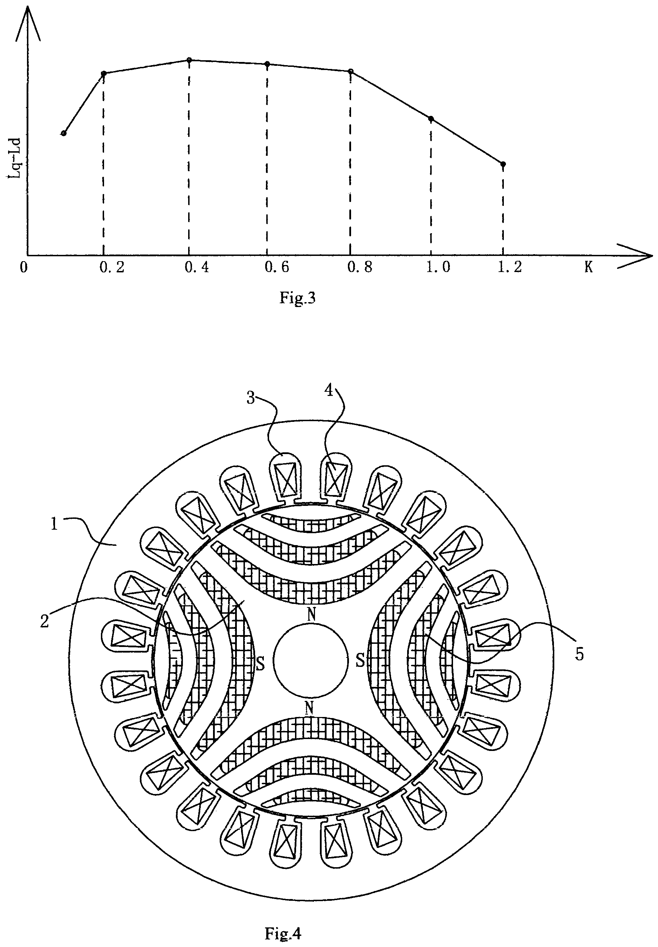

2. Based on the thoughts above, it is testified through lots of experiments that the value of (Lq - Ld) can be increased effectively when $0.15 \leq K \leq 0.85$, so as to increase the output torque of the permanent magnet synchronous motor. Preferably, $0.2 \leq K \leq 0.80$; and, when $K = 0.4$, the output torque of the permanent magnet synchronous motor reaches the maximum, as shown in Fig.3.

3. There is a clearance between each of the two ends of each permanent magnet 7 and its corresponding magnet slot 6, which can prevent the two ends of the permanent magnet 7 from being demagnetized and avoid damaging the permanent magnet 7 in assembling.

When the permanent magnet is definite, the permanent magnetic torque of the permanent magnet synchronous motor is substantially determined. By adopting the technical scheme of the present embodiment, the value of (Lq - Ld) will be increased by improving the structure of the permanent magnet synchronous motor, so as to increase the output torque of the permanent magnet synchronous motor, as can be seen from the formula below:

$$\text{T} = mp(L_q - L_d)i_d i_q + mp\Psi_{PM} i_q$$

The present invention reduces the reliance on the rare earth, reduces damage to the environment and lowers the cost of production.

In the second embodiment, as shown in Fig. 4, each set of magnet slots 5 comprises three magnet slots 6, the magnet slot 6 is an arc-shaped slot facing outwards along the radial direction. The permanent magnet 7 is arc-shaped as well and the permanent magnet 7 gradually gets smaller in thickness at its two ends. The principle of the present embodiment is the same as that of the first embodiment, the permanent magnet 7 gradually gets smaller in thickness at its two ends, which can not only prevent the permanent magnet from being demagnetized but also prevent the permanent magnet from sliding in the magnet slot 6.

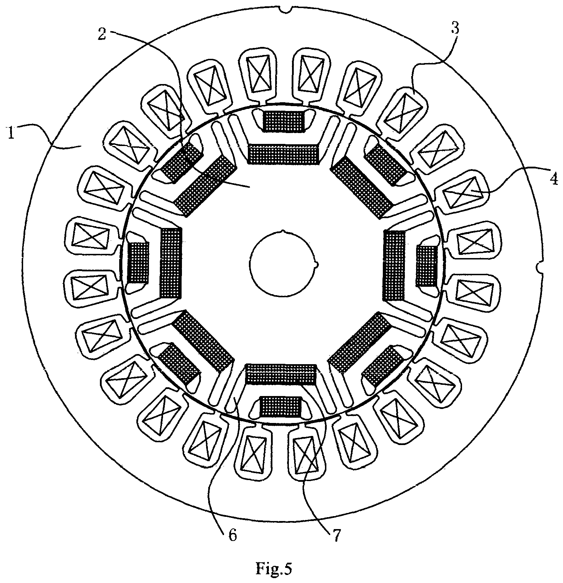

In the third embodiment, as shown in Fig. 5, each set of magnet slots 5 comprises two magnet slots 6, the magnet slot 6 is a U-shaped slot facing outwards along the radial direction. The permanent magnet 7 is a flat plate with equal thickness, and occupies the central part of its corresponding magnet slot 6. The flat permanent magnet 7 is easy to be processed and convenient for magnetizing, and has cost advantages over the arc-shaped permanent magnet. The principle of the third embodiment is the same as that of the first embodiment, which will not be described here again.

The preferred embodiments described above are not restricted. It will be understood by those skilled in the art that various replacements and improvements based on the thoughts of the present disclosure may be made therein without departing from the scope of the present disclosure.

**Claims**

1.  A permanent magnet synchronous motor comprising a stator (1) and a rotor (2), wherein:

    a plurality of wire slots (3) are circumferentially distributed on the stator;
    a plurality of sets of magnet slots (5) are circumferentially distributed in the rotor;
    coils (4) are provided in the wire slots;
    each set of magnet slots is provided therein with permanent magnets (7);
    wherein the permanent magnets are classified into N pole permanent magnets and S pole permanent magnets, the permanent magnets in the same set of magnet slots having the same magnetic polarity and adjacent sets of permanent magnets having opposite magnetic polarities; **characterized in that** the formulae $3PW/L_C S = K$ and $K = 0.4$ are satisfied, wherein, $P$ is the number of pole-pairs of the permanent magnet in the rotor, $W$ is spacing between two adjacent sets of magnet slots, $L_C$ is tooth width of the stator, and $S$ is the number of the wire slots on the stator.

2.  The permanent magnet synchronous motor according to claim 1, wherein: the wire slots are evenly distributed on the stator circumferentially; and the sets of magnet slots are evenly distributed in the rotor circumferentially.

3.  The permanent magnet synchronous motor according to claim 1 or claim 2, wherein: each set of magnet slots comprises at least two magnet slots; and the magnet slots of each set of magnet slots face towards the same direction and are arranged along a radial direction.

4.  The permanent magnet synchronous motor according to any preceding claim, wherein: the magnet slots are arc-shaped slots or U-shaped slots facing outwards along a radial direction.

5.  The permanent magnet synchronous motor according to claim 4, wherein: there is a clearance between each of two ends of each permanent magnet and its corresponding magnet slot.

6.  The permanent magnet synchronous motor according to claim 4 or claim 5, wherein: the permanent magnet is flat or arc-shaped.

7. The permanent magnet synchronous motor according to any of claims 4 to 6, wherein: the permanent magnet is arc-shaped, and each permanent magnet gradually gets smaller in thickness towards its two ends.

**Patentansprüche**

1. Synchroner Permanentmagnetmotor, umfassend einen Stator (1) und einen Rotor (2), wobei:

   eine Mehrzahl von Drahtschlitzen (3) umfänglich an dem Stator verteilt ist;
   eine Mehrzahl von Gruppen von Magnetschlitzen (5) umfänglich in dem Rotor verteilt ist;
   Spulen (4) in den Drahtschlitzen bereitgestellt sind;
   jede Gruppe von Magnetschlitzen darin mit Permanentmagneten (7) versehen ist;
   wobei die Permanentmagneten in N-Pol-Permanentmagneten und S-Pol-Permanentmagneten eingeteilt sind, wobei die Permanentmagneten in der gleichen Gruppe von Magnetschlitzen die gleiche magnetische Polarität aufweisen, und wobei benachbarte Gruppen von Permanentmagneten die entgegengesetzte Polarität aufweisen; **dadurch gekennzeichnet, dass**
   die Formeln $3PW/L_CS = K$ und $K = 0,4$ erfüllt sind, wobei: $P$ die Anzahl der Polpaare des Permanentmagneten in dem Rotor ist, $W$ der Abstand zwischen zwei benachbarten Gruppen von Magnetschlitzen ist, $L_C$ die Zahnbreite des Stators ist und S die Anzahl der Drahtschlitze an dem Stator ist.

2. Synchroner Permanentmagnetmotor nach Anspruch 1, wobei: die Drahtschlitze umfänglich gleichmäßig an dem Stator verteilt sind; und wobei die Gruppen von Magnetschlitzen umfänglich gleichmäßig in dem Rotor verteilt sind.

3. Synchroner Permanentmagnetmotor nach Anspruch 1 oder 2, wobei: jede Gruppe von Magnetschlitzen mindestens zwei Magnetschlitze umfasst; und wobei die Magnetschlitze jeder Gruppe von Magnetschlitzen in die gleiche Richtung zeigen und entlang einer radialen Richtung angeordnet sind.

4. Synchroner Permanentmagnetmotor nach einem der vorstehenden Ansprüche, wobei: die Magnetschlitze bogenförmige Schlitze oder U-förmige Schlitze sind, die entlang einer radialen Richtung nach außen zeigen.

5. Synchroner Permanentmagnetmotor nach Anspruch 4, wobei: ein Zwischenabstand zwischen jedem der beiden Enden jedes Permanentmagneten und dessen entsprechenden Magnetschlitz besteht.

6. Synchroner Permanentmagnetmotor nach Anspruch 4 oder 5, wobei: der Permanentmagnet flach oder bogenförmig ist.

7. Synchroner Permanentmagnetmotor nach einem der Ansprüche 4 bis 6, wobei: der Permanentmagnet bogenförmig ist, und wobei die Dicke jedes Permanentmagneten in Richtung dessen beiden Enden jeweils zunehmend kleiner wird.

**Revendications**

1. Moteur synchrone à aimants permanents comprenant un stator (1) et un rotor (2) :

   une pluralité d'encoches de fil (3) étant réparties circonférentiellement sur le stator ;
   une pluralité de jeux d'encoches d'aimant (5) étant répartis circonférentiellement dans le rotor ;
   des bobines (4) étant fournies dans les encoches de fil ;
   chaque jeu d'encoches d'aimant étant muni intérieurement d'aimants permanents (7) ;
   les aimants permanents étant classés entre aimants permanents à pôle N et aimants permanents à pôle S, les aimants permanents dans le même jeu d'encoches d'aimant ayant la même polarité magnétique et des jeux adjacents d'aimants permanents ayant des polarités magnétiques opposées, **caractérisé en ce que**
   les formules $3PW/LcS = K$ et $K = 0,4$ sont satisfaites, $P$ étant le nombre de paires de pôles de l'aimant permanent dans le rotor, $W$ étant l'espacement entre deux jeux adjacents d'encoches d'aimant, $Lc$ étant la largeur de dent du stator, et S étant le nombre d'encoches de fil sur le stator.

**2.** Moteur synchrone à aimants permanents selon la revendication 1, les encoches de fil étant réparties de façon égale circonférentiellement sur le stator ; et les jeux d'encoches d'aimant étant répartis de façon égale circonférentiellement dans le rotor.

**3.** Moteur synchrone à aimants permanents selon la revendication 1 ou 2, chaque jeu d'encoches d'aimant comprenant au moins deux encoches d'aimant ; et les encoches d'aimant de chaque jeu d'encoches d'aimant faisant face dans la même direction et étant disposées le long d'une direction radiale.

**4.** Moteur synchrone à aimants permanents selon l'une quelconque des revendications précédentes, les encoches d'aimant étant des encoches en forme d'arc ou des encoches en forme de U faisant face vers l'extérieur le long d'une direction radiale.

**5.** Moteur synchrone à aimants permanents selon la revendication 4, un espace libre existant entre deux extrémités de chaque aimant permanent et son encoche d'aimant correspondante.

**6.** Moteur synchrone à aimants permanents selon la revendication 4 ou 5, l'aimant permanent étant plat ou en forme d'arc.

**7.** Moteur synchrone à aimants permanents selon l'une quelconque des revendications 4 à 6, l'aimant permanent étant en forme d'arc, et chaque aimant permanent rétrécissant progressivement en épaisseur vers ses deux extrémités.

EP 2 738 923 B1

Fig.1

Fig.2

Fig.3

Fig.4

Fig.5

**EP 2 738 923 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002153796 A
- EP 0746079 A
- US 2003094875 A
- US 2004150282 A